# FASCICULE DE BREVET EUROPEEN

(11) **EP 0 579 536 B1**
(45) Date de publication et mention de la délivrance du brevet: **02.10.1996**
(21) Numéro de dépôt: 93401804.5
(22) Date de dépôt: 12.07.1993
(51) Int. Cl.: B61D 27/00, B60H 1/00, G01L 13/00

(54) **Dispositif et procédé de suppression des variations brutales de pression dans les véhicules, en particulier dans les véhicules terrestres**
Vorrichtung und Verfahren, um plötzliche Druckschwankungen in Fahrzeugen, insbesondere Landfahrzeugen aufzuheben
Device and method to suppress sudden pressure changes in vehicles, in particular land vehicles

(30) Priorité: 16.07.1992 FR 9208798
(43) Date de publication de la demande: 19.01.1994
(73) Titulaire: GEC ALSTHOM TRANSPORT SA, 75016 Paris (FR)
(72) Inventeur: Girard, Hervé, F-17000 La Rochelle (FR); Peube, Jean-Laurent, F-86022 Poitiers (FR); Gervais, Yves, F-86022 Poitiers (FR)
(74) Mandataire: Bourely, Paul

(56) Documents cités:
- EP-A- 0 143 931
- EP-A- 0 315 108
- EP-A- 0 326 044
- US-A- 3 563 155
- ZEV vol. 114, no. 8, Août 1990, BERLIN page 274 , XP142288 TIEFENBOECK 'neue druckertuechtigte Reisezugwagen etc.'

## Description

L'invention concerne un dispositif et un procédé de suppression des variations brutales de pression dans les véhicules, en particulier dans les véhicules terrestres. Elle s'applique notamment aux trains à grande vitesse.

Un véhicule en mouvement dans l'atmosphère est soumis à des forces de pression dont la répartition sur la paroi externe dépend de la forme de celle-ci et de la vitesse d'avancement. Lorsque ce véhicule passe à proximité d'un obstacle (entrée d'un tunnel, pont, objets divers au voisinage de la voie de circulation,...) ou lors du croisement d'un autre véhicule, il se produit une déformation du champ des vitesses aérodynamiques que le véhicule entraîne avec lui. Il en résulte alors des variations rapides de pression sur les parois externes du véhicule. Cet effet est d'autant plus prononcé que la vitesse du véhicule est plus élevée, les pressions étant approximativement proportionnelles au carré de la vitesse.

Dans le cas d'un véhicule où le renouvellement de l'air interne est effectué par climatisation ou ventilation à partir de l'air extérieur, la pression interne est voisine de la pression externe. Les variations de pression externes se répercutent presque instantanément à l'intérieur du véhicule en raison des dimensions des sections des circuits de ventilation. La constante de temps des transmissions de variations de pression à l'intérieur des véhicules climatisés ou ventilés est donc petite, en raison même des caractéristiques des circuits de ventilation. Ce phénomène rapide ne se produit pas lorsque l'intérieur du véhicule est pressurisé (avions par exemple).

A titre d'exemple, lors de l'entrée des trains à grande vitesse dans les tunnels ou les tranchées, des variations rapides de pression se produisent sur la paroi externe des véhicules. Ces variations brutales se propagent dans l'espace confiné constitué par le tunnel ou la tranchée, et sont connues sous la terminologie "d'ondes de pression". Par ailleurs ces ondes de pression, qui se propagent dans l'espace confiné extérieur, se réfléchissent à ses extrémités, créant ainsi des ondes de pression de retour aussi importantes que les ondes directes. Lorsque les voitures ont un bon degré d'étanchéité, ces variations se répercutent rapidement à l'intérieur de celles-ci par les circuits de ventilation et de climatisation, causant une gène importante aux voyageurs. Il est ainsi courant de subir des variations de pression pouvant atteindre 2000 pascals pendant moins d'une seconde.

Certains trains à grande vitesse utilisent, pour remédier à ce problème d'ondes de pression, des ventilateurs dits à fronts vaide placés dans le circuit de ventilation. Ces ventilateurs font obstacle, dans une certaine mesure, aux ondes de pression mais ils ont l'inconvénient d'être coûteux et bruyants. Ils constituent un ajout de matériel dont le poids et l'encombrement n'est pas négligeable alors même que des efforts importants sont faits pour alléger les voitures le plus possible. Ils sont gros consommateurs d'énergie. Il faut en outre en placer deux par voiture .

Le document EP 0 143 931 décrit un dispositif de suppression des variations brutales de pression dans un véhicule.

Le document EP 0 315 108 décrit un dispositif de suppression des variations brutales de pression dans un véhicule conforme au préambule de la revendication 1 et un procédé de suppression des variations brutales de pression dans un véhicule conforme au préambule de la revendication 10.

Pour pallier ces inconvénients, on propose selon la présente invention d'imposer à la pression interne d'un véhicule climatisé ou ventilé une évolution temporelle fixée à priori lorsqu'une variation brutale externe de pression survient. Pour cela, un dispositif approprié crée en temps réel des modifications rapides des caractéristiques géométriques des circuits de ventilation ou de climatisation. Ces modifications sont telles que la variation du débit d'air entrant dans le véhicule qui en résulte, entraîne une variation de la pression interne à celui-ci suivant la loi temporelle fixée. Dès que l'équilibre entre les pressions internes et externes est réalisé, on remet en oeuvre le circuit de ventilation de façon à permettre de nouveau le renouvellement normal en air frais. Un tel dispositif, placé sur les circuits de ventilation revient à transformer très rapidement un circuit Prévu pour assurer un renouvellement d'air par ventilation ou climatisation, en un circuit assurant un contrôle de la pression interne du véhicule (et vice-versa), quelle que soit la variation brutale de la pression extérieure (vitesse du train, nature de l'obstacle, topologie du milieu extérieur,...).

L'invention a donc pour objet un dispositif de suppression des variations brutales de pression dans un véhicule climatisé ou ventilé, le véhicule comprenant:
- un orifice d'entrée de l'air extérieur et un orifice de sortie de l'air intérieur, l'orifice d'entrée étant connecté à un conduit d'aspiration dirigeant l'air aspiré vers le système de climatisation ou de ventilation, l'orifice de sortie étant connecté à un conduit rejetant l'air intérieur vers l'extérieur;
- un détecteur des variations brutales de pression du véhicule délivrant des signaux représentatifs de ces variations;
- des moyens d'obturation des conduits d'aspiration et de rejet; et
- un organe de contrôle recevant les signaux du détecteur et commandant l'obturation des conduits à partir d'un premier niveau déterminé de variation de pression externe, cet organe commandant également la réouverture des conduits après que la variation de pression extérieure est descendue en-dessous d'un second niveau déterminé;
caractérisé par des moyens d'équilibrage entre pression intérieure et pression extérieure par circulation d'un débit d'air contrôlé entre l'extérieur et l'intérieur du véhicule, comprenant une dérivation, de manière à maintenir la variation temporelle de pression interne au véhicule endessous d'une valeur imposée.

Le détecteur des variations de pression peut être un capteur de pression ou un capteur de débit instantané.

Les moyens d'obturation peuvent avantageusement être constitués par des volets situés à l'intérieur des conduits d'aspiration et de rejet. Ceci permet de les réaliser simplement.

Chaque volet peut être mobile en rotation autour d'un axe solidaire du volet et commandé par un actionneur.

Les moyens d'équilibrage entre pressions intérieure et extérieure peuvent comprendre les défauts d'étanchéité du véhicule.

Ils peuvent comprendre l'obturation partielle des conduits d'aspiration et de rejet par les moyens d'obturation.

Ils peuvent aussi comprendre une dérivation dont l'ouverture et la fermeture sont commandées par l'organe de contrôle. Dans ce cas, des moyens d'obturation communs peuvent commmander alternativement l'ouverture et l'obturation de l'un des conduits et de la dérivation.

Le dispositif peut aussi être modifié pour contrôler le débit normal de climatisation par action partielle des moyens d'obturation des conduits d'aspiration et de rejet.

L'invention a également pour objet un procédé de suppression des variations brutales de pression dans un véhicule climatisé ou ventilé; caractérisé par:
- la détection des variations brutales de pression du véhicule et la délivrance de signaux représentatifs de ces variations;
- l'obturation des conduits d'aspiration et de rejet;
- la réception des signaux et la commande de l'obturation des conduits, par un organe de contrôle, à partir d'un premier niveau déterminé de variation de pression externe, cet organe commandant également la réouverture des conduits après que la variation de pression extérieure est descendue en-dessous d'un second niveau déterminé; et
- l'équilibrage entre pression intérieure et pression extérieure;
   caractérisé en ce que l'équilibrage entre pression intérieure et pression extérieure se fait par circulation d'un débit d'air contrôlé entre l'extérieur et l'intérieur du véhicule, de manière à maintenir la variation temporelle de pression interne au véhicule en-dessous d'une valeur imposée.

L'invention sera mieux comprise et d'autres détails et particularités apparaîtront à la lecture de la description qui va suivre, donnée à titre non limitatif, accompagnée des dessins annexés parmi lesquels :
- la figure 1 représente, de manière schématique, un véhicule ferroviaire connu avec ses conduits d'entrée et de sortie d'air pour la ventilation ou la climatisation du véhicule,
- la figure 2 est une vue schématique expliquant le fonctionnement du dispositif selon l'art antérieur de la figure 1,
- les figures 3 et 4 illustrent le système d'obturation des conduits d'entrée et de sortie d'air pour le dispositif selon l'invention,
- la figure 5 est une vue schématique du dispositif selon l'invention.

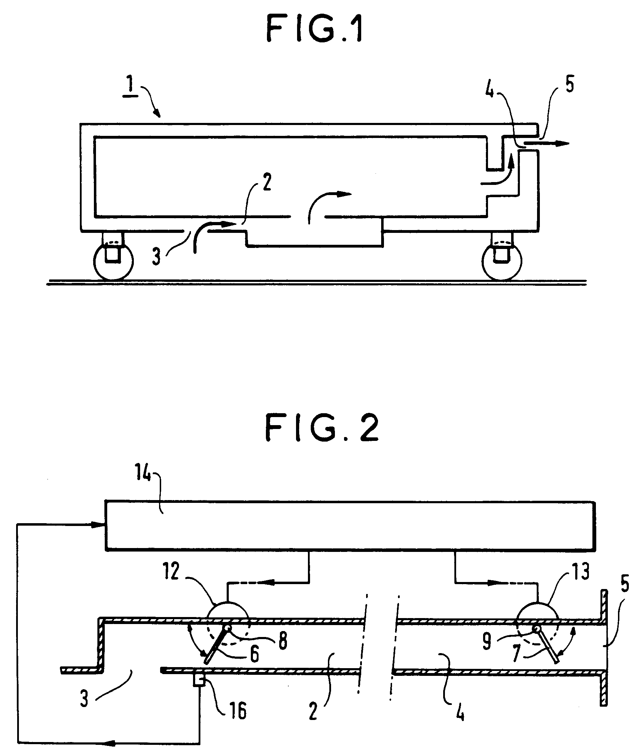

La figure 1 représente le schéma général d'un circuit de ventilation d'une voiture 1 de train à grande vitesse. Cette voiture comprend un conduit d'aspiration 2 de l'air extérieur disposé entre l'orifice d'entrée 3 et le circuit interne de ventilation et un conduit de rejet 4 de l'air intérieur disposé entre le circuit interne de ventilation et l'orifice de sortie d'air 5. Les différents éléments du circuit interne de ventilation (recirculation partielle de l'air, dispositif de chauffage ou de climatisation, ventilateurs, etc.) n'ont pas d'influence particulière sur le fonctionnement du dispositif selon l'invention.

Lors du passage de la voiture dans une zone de variation brutale de pression, un volume relativement important d'air (de l'ordre de 1 à 2m³) entre ou sort brutalement de la voiture par les conduits 2 et 4. Cette variation rapide de la masse d'air contenue dans la voiture est directement liée à la variation de pression qu'on peut, selon l'invention, contrôler en plaçant dans les conduits 2 et 4 des éléments obturateurs.

Le dispositif selon l'invention effectue les opérations suivantes. Une onde de pression qui survient est détectée grâce à l'un des ses effets instantanés (variation brutale d'une pression, d'un débit instantané par exemple) par un détecteur de type connu. Le phénomène peut être anticipé en effectuant la détection en un ou plusieurs points du train, à l'intérieur ou à l'extérieur de celui-ci. Dès la détection de l'onde de pression, les éléments obturateurs bouchent totalement ou presque, et de manière immédiate, les conduits 2 et 4. Le débit d'air dû à l'onde de pression est alors contrôlé par un orifice de fuite. Cet orifice de fuite peut être constitué par un orifice de dimensions calibrés à priori. Il peut aussi être constitué par un orifice de dimensions modulables en fonction de la variation temporelle de pression interne imposée. L'orifice de dimensions calibrées peut éventuellement être constitué pour partie par les défauts d'étanchéité du véhicule. On force ainsi le débit d'air échangé entre l'intérieur et l'extérieur du véhicule à se faire sur une durée suffisamment longue pour que les variations de pression (surpression ou dépression) ne soient pas gênantes pour les passagers du véhicule.

Le contrôle de l'onde de pression est interrompu dès que l'équilibrage des pressions intérieure et extérieure est réalisé. Les conduits 2 et 4 sont alors réouverts. Le système de ventilation du véhicule est remis en fonctionnement normal pour l'extraction de l'air vicié et le renouvellement en air neuf.

La figure 2 illustre le fonctionnement du dispositif dans un exemple de réalisation. Les éléments obturateurs sont ici des volets : un volet 6 disposé dans le conduit d'aspiration 2 et un volet 7 disposé dans le conduit de rejet 4. Un détecteur de variation de presssion 16 (par exemple un capteur de pression ou un capteur de débit instantané) est diposé sous le véhicule. On peut utiliser un ou plusieurs capteurs détectant les variations de pression par l'un de leurs effets.

Ainsi, dans le cas de la surpression, on peut détecter, selon le type de capteur, la surpression externe elle-même, le début d'accroissement de pression interne (avec un capteur placé à l'intérieur du véhicule), l'accroissement très important de débit instantané dans l'entrée 3 du conduit 2 ou le renversement du sens de l'écoulement de l'air extrait dans la sortie 5 du conduit 4.

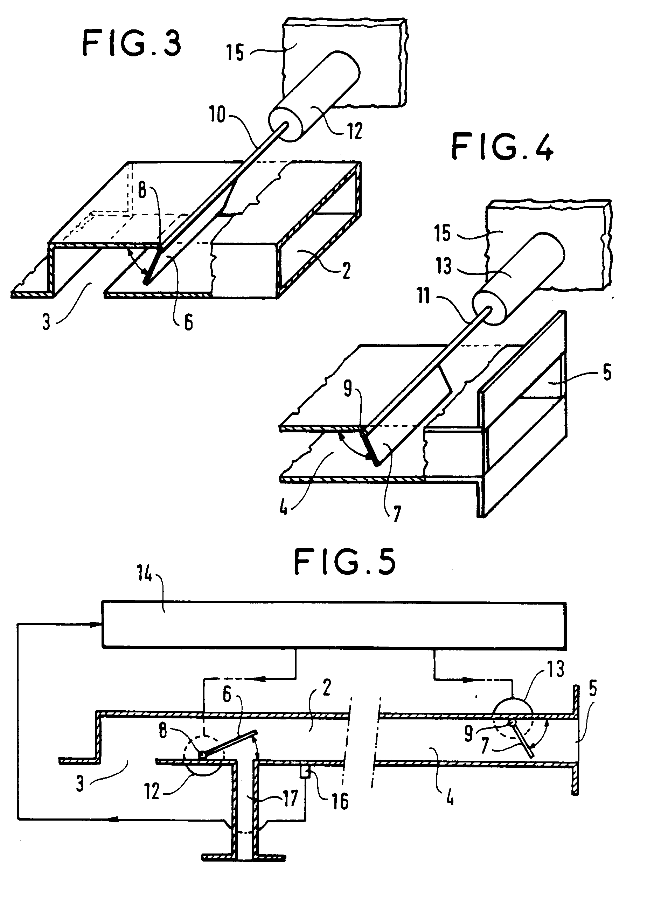

Les volets 6 et 7 sont de dimensions adaptées aux conduits 2 et 4. Ils sont disposés au voisinage de l'entrée 3 et de la sortie 5. Ils sont mobiles en rotation autour d'axes 10 et 11 solidaires de l'un de leurs côtés, grâce à des systèmes à charnière 8 et 9 associés aux parois des conduits 2 et 4 (voir les figures 3 et 4). Les axes 10 et 11 sont commandés en rotation respectivement par des actionneurs 12 et 13 fixés sur la structure résistante 15 du véhicule. Il peut s'agir d'actionneurs pneumatiques, hydrauliques ou électromécaniques.

Un système électronique 14 de traitement des signaux envoyés par le ou les capteurs 16 élabore des signaux de commande des actionneurs 12 et 13. Ce système électronique 14 peut être du type décrit dans le document FR 2 613 089. Il peut être intégré au système de contrôle général du train. Dès que le ou les détecteurs d'ondes de pression ont décelé une onde de pression jugée trop importante, le système électronique 14 élabore instantanément des signaux commandant aux actionneurs la fermeture des volets. Les volets peuvent être fermés très rapidement, en un dixième de seconde par exemple. Ils seront de préférence réalisés en une matière présentant une faible inertie comme l'aluminium ou un matériau composite.

Le système électronique 14 commande également, en même temps que la fermeture des volets, l'arrêt des dispositifs de climatisation ou de ventilation. Ceux-ci seront remis en fonctionnement, toujours par commande du système électronique, à la réouverture des volets.

Dès que le détecteur d'ondes de pression ne décèle plus de variations de pression inadmissibles pour les passagers, le système électronique 14 commande la réouverture progressive des volets. Le temps de réouverture des volets est fonction du degré de confort désiré. Il peut être déterminé par l'expérience. Il peut aussi être déterminé par le système électronique en fonction de certains paramètres comme l'amplitude des variations de pression externe, la durée de ces variations, etc. La réouverture des conduits est donc réalisée lorsque la variation de pression extérieure est descendue en-dessous d'un niveau déterminé par l'expérience ou le calcul. Compte tenu de ce que le débit d'air instantané résultant des variations brutales de pression extérieure est beaucoup plus grand que le débit usuel de ventilation, les volets peuvent ne pas être en fonction en dehors des zones de variations brutales de pression. Ils peuvent, en l'absence d'ondes de pression, être complètement effacés et donc ne pas perturber le fonctionnement normal du système de ventilation.

Comme il a été dit plus haut, la fuite assurant l'équilibrage des pressions intérieure et extérieure est contrôlée par un orifice de fuite qui peut être constitué pour partie par les défauts d'étanchéité du véhicule.

L'orifice de fuite peut être complété de différentes façons. Les volets peuvent n'obturer que partiellement les conduits de manière à laisser passer un certain débit d'air. Ils peuvent obturer complètement les conduits et être pourvus d'un trou de diamètre déterminé par le calcul ou l'expérieure.

Le dispositif selon l'invention ne contrôle pas directement le débit d'air de ventilation ou de climatisation. Néanmoins, il peut être utilisé pour contrôler le débit normal de climatisation et disposer de plusieurs régimes de climatisation, par exemple lorsque la température extérieure est très élevée ou très basse. Plusieurs types de modification sont possibles.

Le positionnement normal des volets peut être une position d'ouverture intermédiaire afin de réduire le débit nominal de ventilation.

Le débit d'air peut être contrôlé par une commande continue de la position des volets, à condition que les performances des actionneurs permettent un contrôle efficace de toutes les positions de ces volets. La position des volets est alors le résultat d'une régulation effectuée à partir d'une mesure du débit de ventilation, par exemple par un débitmètre.

L'équilibrage des pressions extérieure et intérieure peut encore être obtenu par le dispositif représenté à la figure 5. Selon cette variante, il est prévu une dérivation 17 connectée sur le conduit d'aspiration 2. Cependant, cette dérivation peut être connectée en tout point du circuit de ventilation compris entre les volets 6 et 7. En l'absence d'ondes de pression, cette dérivation est normalement obturée.

Le dispositif de la figure 5 fonctionne de la manière suivante. Dès que le détecteur 16 révèle l'existence d'une onde de pression, les conduits 2 et 4 sont obturés et la dérivation 17 est ouverte. L'obturation d'un des circuits principaux de ventilation et l'ouverture de la dérivation peuvent être assurées par deux mécanismes indépendants ou par un mécanisme unique comme le montre la figure 5 où le volet 6 peut en même temps obturer un conduit et laisser l'autre ouvert. La dérivation 17 contrôle le débit d'air dû à l'onde de pression, en plus des défauts d'étanchéité du véhicule. Les dimensions de la dérivation 17 peuvent être définies préalablement. Cette dérivation peut également posséder une singularité de dimensions modulables en fonction de la loi de variation temporelle de pression imposée.

Dès que l'équilibrage des pressions est estimée réalisée, les conduits 2 et 4 sont réouverts et la dérivation 17 est obturée. On revient au fonctionnement normal du système de ventilation.

Le dispositif selon l'invention possède également l'avantage être très peu consommateur d'énergie.

## Revendications

1. Dispositif de suppression des variations brutales de pression dans un véhicule climatisé ou ventilé, le véhicule (1) comprenant:
- un orifice d'entrée (3) de l'air extérieur et un orifice de sortie (5) de l'air intérieur, l'orifice d'entrée étant connecté à un conduit d'aspiration (2) dirigeant l'air aspiré vers le système de climatisation ou de ventilation, l'orifice de sortie étant connecté à un conduit (4) rejetant l'air intérieur vers l'extérieur;
- un détecteur (16) des variations brutales de pression du véhicule délivrant des signaux représentatifs de ces variations;
- des moyens d'obturation (6, 7) des conduits d'aspiration (2) et de rejet (4); et
- un organe de contrôle (14) recevant les signaux du détecteur et commandant l'obturation des conduits (2, 4) à partir d'un premier niveau déterminé de variation de pression externe, cet organe commandant également la réouverture des conduits après que la variation de pression extérieure est descendue en-dessous d'un second niveau déterminé;
caractérisé par des moyens d'équilibrage entre pression intérieure et pression extérieure par circulation d'un débit d'air contrôlé entre l'extérieur et l'intérieur du véhicule, comprenant une dérivation (17), de manière à maintenir la variation temporelle de pression interne au véhicule en-dessous d'une valeur imposée.

2. Dispositif selon la revendication 1, caractérisé en ce que le détecteur des variations de pression (16) est un capteur de pression ou un capteur de débit instantané.

3. Dispositif selon l'une des revendications 1 ou 2, caractérisé en ce que les moyens d'obturation sont constitués par des volets (6, 7) situés à l'intérieur des conduits d'aspiration (2) et de rejet (4).

4. Dispositif selon la revendication 3, caractérisé en ce que chaque volet (6, 7) est mobile en rotation autour d'un axe (10, 11) solidaire du volet et commandé par un actionneur (12, 13).

5. Dispositif selon l'une quelconque des revendications 1 à 4, caractérisé en ce que les moyens d'équilibrage entre pression intérieure et extérieure comprennent les défauts d'étanchéité du véhicule.

6. Dispositif selon l'une quelconque des revendications 1 à 5, caractérisé en ce que les moyens d'équilibrage entre pression intérieure et extérieure comprennent l'obturation partielle des conduits d'aspiration (2) et/ou de rejet (4) par les moyens d'obturation (6, 7).

7. Dispositif selon l'une quelconque des revendications 1 à 6, caractérisé en ce que l'ouverture et la fermeture de la dérivation (17) sont commandées par l'organe de contrôle (14).

8. Dispositif selon la revendication 7, caractérisé en ce que des moyens d'obturation communs (6) commandent alternativement l'ouverture et l'obturation de l'un des conduits (2) et de la dérivation (17).

9. Dispositif selon l'une quelconque des revendications précédentes, caractérisé en ce qu'il est modifié pour contrôler le débit normal de climatisation par action partielle des moyens d'obturation des conduits d'aspiration (2) et de rejet (4).

10. Procédé de suppression des variations brutales de pression dans un véhicule climatisé ou ventilé selon l'une quelconque des revendications précédentes; comportant les étapes consistant en :
- la détection des variations brutales de pression du véhicule et la délivrance de signaux représentatifs de ces variations;
- l'obturation des conduits d'aspiration (2) et de rejet (4);
- la réception des signaux et la commande de l'obturation des conduits (2, 4), par un organe de contrôle, à partir d'un premier niveau déterminé de variation de pression externe, cet organe commandant également la réouverture des conduits après que la variation de pression extérieure est descendue en-dessous d'un second niveau déterminé; et
- l'équilibrage entre pression intérieure et pression extérieure;
caractérisé en ce que l'équilibrage entre pression intérieure et pression extérieure se fait par circulation d'un débit d'air contrôlé entre l'extérieur et l'intérieur du véhicule, de manière à maintenir la variation temporelle de pression interne au véhicule endessous d'une valeur imposée.

## Claims

1. A device for eliminating sudden changes of pressure in a ventilated or air-conditioned vehicle, the vehicle (1) comprising:
an inlet orifice (3) for outside air and an outlet orifice (5) for inside air, the inlet orifice being connected to a suction duct (2) directing sucked-in air towards the ventilation or air-conditioning system, the outlet orifice being connected to a rejection duct (4) rejecting inside air to the outside;
a detector (16) for detecting sudden changes of pressure of the vehicle and for delivering signals representative of said changes;
closure means (6, 7) for closing the suction duct (2) and the rejection duct (4); and
a control unit (14) that receives the signals from the detector and controls closure of the ducts (2, 4) on the basis of a first determined rate of change in outside pressure, said unit also controlling re-opening of the ducts after the rate of change in outside pressure has dropped below a second determined rate;
the device being characterized in that means are provided for balancing the inside and outside pressures by causing a controlled flow of air between the outside and the inside of the vehicle in such a manner as to keep change in the pressure inside the vehicle as a function of time below a set value, said means including a branch connection (17).

2. A device according to claim 1, characterized in that the detector (16) for detecting variations in pressure is a pressure sensor or an instantaneous flow rate sensor.

3. A device according to claim 1 or 2, characterized in that the closure means are constituted by flaps (6, 7) situated inside the suction duct (2) and the rejection duct (4).

4. A device according to claim 3, characterized in that each flap (6, 7) is rotatable about the axis of a shaft (10, 11) secured to the flap and controlled by an actuator (12, 13).

5. A device according to any one of claims 1 to 4, characterized in that the means for balancing the inside and outside pressures include the leaks of the vehicle.

6. A device according to any one of claims 1 to 5, characterized in that the means for balancing the inside and outside pressures include partially closing the suction duct (2) and/or the rejection duct (4) using the closure means (6, 7).

7. A device according to any one of claims 1 to 6, characterized in that the branch connection (17) is opened and closed under the control of a control unit (14).

8. A device according to claim 7, characterized in that common closure means (6) control opening and closing of one of said ducts (2) and of the branch connection (17) in alternation.

9. A device according to any preceding claim, characterized in that it is modified to control the normal air-conditioning flow rate by the closure means for the suction duct (2) and for the rejection duct (4) acting partially.

10. A method of eliminating sudden changes of pressure in a ventilated or air-conditioned vehicle according to any preceding claim; the method comprising the steps consisting in:
detecting sudden changes of pressure of the vehicle and delivering signals representative of said changes;
closing the suction duct (2) and the rejection duct (4);
receiving signals and controlling closure of the ducts (2, 4), by a control unit, on the basis of a first determined rate of change in outside pressure, said unit also controlling re-opening of the ducts after the rate of change in outside pressure has dropped below a second determined rate; and
balancing the inside and outside pressures;
the device being characterized in that the inside and outside pressures are brought into balance by a controlled flow of air between the outside and the inside of the vehicle so as to keep the change in the internal pressure of the vehicle as a function of time below a set value.

## Patentansprüche

1. Vorrichtung zur Vermeidung plötzlicher Druckstöße in einem klimatisierten oder belüfteten Fahrzeug, wobei das Fahrzeug (1) aufweist:
- eine Einlaßöffnung (3) für Außenluft und eine Auslaßöffnung (5) für die Innenluft, wobei die Einlaßöffnung an einen Einlaßkanal (2) angeschlossen ist, der die angesaugte Luft zum Klimatisierungs- oder Lüftungssystem leitet, während die Auslaßöffnung an einen Kanal (4) angeschlossen ist und die Innenluft nach außen ausstößt,
- einen Detektor (16) zur Erfassung der plötzlichen Druckstöße des Fahrzeugs, wobei der Detektor für diese Stöße repräsentative Signale liefert,
- Mittel (6, 7) zum Verschluß der Einlaß- (2) und Auslaßkanäle (4),
- und ein Regelorgan (14), das die Signale des Detektors zugeführt erhält und den Verschluß der Kanäle (2, 4) ab einem ersten bestimmten Pegel der äußeren Druckveränderung sowie ein Wiederöffnen dieser Kanäle steuert, nachdem die Veränderung des Außendrucks unter einen zweiten vorbestimmten Wert abgesunken ist,
gekennzeichnet durch Mittel zum Ausgleich des Drucks zwischen Innen- und Außenseite mit Hilfe eines geregelten Luftstroms zwischen der Außenseite und der Innenseite des Fahrzeugs, wobei diese Mittel eine Ableitung (17) aufweisen, derart, daß die zeitliche Veränderung des Innendrucks des Fahrzeugs unter einem Sollwert bleibt.

2. Vorrichtung nach Anspruch 1, dadurch gekennzeichnet, daß der Detektor (16) für die Druckänderungen eine Drucksonde oder eine Sonde zur Messung des augenblicklichen Durchsatzes ist.

3. Vorrichtung nach einem der Ansprüche 1 oder 2, dadurch gekennzeichnet, daß die Verschlußmittel von Klappen (6, 7) gebildet werden, die sich in den Einlaß- (2) und Auslaßkanälen (4) befinden.

4. Vorrichtung nach Anspruch 3, dadurch gekennzeichnet, daß jede Klappe (6, 7) um eine mit der Klappe fest verbundene Achse (10, 11) schwenkbar angelenkt ist und von einem Betätigungsorgan (12, 13) gesteuert wird.

5. Vorrichtung nach einem beliebigen der Ansprüche 1 bis 4, dadurch gekennzeichnet, daß die Mittel zum Ausgleichen des Drucks zwischen Innen- und Außenseite Undichtigkeiten des Fahrzeugs enthalten.

6. Vorrichtung nach einem beliebigen der Ansprüche 1 bis 4, dadurch gekennzeichnet, daß die Mittel zum Ausgleichen des Drucks zwischen Innen- und Außenseite den partiellen Verschluß der Ansaug- (2) und Ausstoßkanäle (4) mit Hilfe von Verschlußmitteln (6, 7) beinhalten.

7. Vorrichtung nach einem beliebigen der Ansprüche 1 bis 6, dadurch gekennzeichnet, daß das Öffnen und Schließen der Ableitung (17) durch das Regelorgan (14) gesteuert werden.

8. Vorrichtung nach Anspruch 7, dadurch gekennzeichnet, daß gemeinsame Verschlußmittel (6) abwechselnd das Öffnen und Schließen eines der Kanäle (2) und der Ableitung (17) steuern.

9. Vorrichtung nach einem beliebigen der vorhergehenden Ansprüche, dadurch gekennzeichnet, daß sie so verändert wird, daß der normale Durchsatz für die Klimatisierung durch partielles Einwirken der Mittel zum Verschluß der Einlaß(2) und Auslaßkanäle (4) gesteuert wird.

10. Verfahren zur Vermeidung von plötzlichen Druckstößen in einem klimatisierten oder belüfteten Fahrzeug gemäß einem beliebigen der vorhergehenden Ansprüche, das die folgenden Verfahrensschritte aufweist:
- die Erfassung der plötzlichen Druckstöße des Fahrzeugs und die Ausgabe von für diese Stöße repräsentativen Signalen,
- den Verschluß der Einlaß- (2) und Auslaßkanäle (4),
- den Empfang der Signale und die Steuerung des Verschlusses der Kanäle (2, 4) durch ein Regelorgan ausgehend von einem ersten bestimmten Wert der äußeren Druckveränderung, wobei dieses Organ auch das erneute Öffnen der Kanäle steuert, nachdem die Veränderung des Außendrucks unter einen zweiten bestimmten Wert abgesunken ist,
- und den Ausgleich zwischen dem Innendruck und dem Außendruck,
dadurch gekennzeichnet, daß der Ausgleich zwischen dem Innendruck und dem Außendruck durch einen kontrollierten Luftstrom zwischen der Außenseite und der Innenseite des Fahrzeugs erfolgt, so daß die zeitliche Veränderung des Innendrucks des Fahrzeugs unter einem Sollwert bleibt.
